# DEMANDE DE BREVET EUROPEEN

(11) **EP 1 762 939 A1**
(43) Date de publication de la demande: **14.03.2007**
(21) Numéro de dépôt: 06291408.0
(22) Date de dépôt: 06.09.2006
(51) Int. Cl.: G06F 11/14

(54) **Procédé de mémorisation de données numériques dans un grand système informatique et dispositif associé**

(30) Priorité: 09.09.2005 FR 0509211
(71) Demandeur: Bourhis, Charles-Yves, 44800 Saint-Herblain (FR); Sourisseau, Jean-François, 44680 Saint Mars De Coutais (FR)
(72) Inventeur: Bourhis, Charles-Yves, 44800 Saint-Herblain (FR); Sourisseau, Jean-François, 44680 Saint Mars De Coutais (FR)
(74) Mandataire: Laget, Jean-Loup

(57) **Abrégé**

Procédé de mémorisation, dans un grand système informatique, de données numériques issues d'un ordinateur (1) central comprenant une mémoire, ledit procédé comprenant une première étape (A) de copie desdites données sur une mémoire à accès direct, appelée cache (2), créant ainsi une sauvegarde logique desdites données, une deuxième étape (B) de copie, sur un support (3) physique différent du cache et de la mémoire de l'ordinateur, de la sauvegarde logique des données numériques créée lors de l'étape (A), puis une troisième étape de suppression des données de la première sauvegarde présentes sur le cache, caractérisé en ce que les données de la sauvegarde logique créée lors de l'étape (A) sont stockées sur le cache de manière à être reconnues par l'ordinateur comme des données à accès direct et après l'étape (B), les données issues de l'étape (A) restent présentes dans le cache, la suppression desdites données étant paramétrable par l'ordinateur.
Le dispositif associé à ce procédé permet d'émuler un robot virtuel dans un grand système informatique, utilisant un ordinateur central (et non un serveur dédié), des disques et des dérouleurs de bandes standards, c'est-à-dire non spécifiquement construits ou programmés pour cet usage.

## Description

L'invention concerne un procédé de mémorisation, dans un grand système informatique, de données numériques issues d'au moins un ordinateur central comprenant une mémoire, ledit procédé comprenant au moins une première étape de copie desdites données numériques sur des moyens formant une mémoire à accès direct, appelée cache, notamment des mémoires à disques, créant ainsi une sauvegarde logique desdites données, puis au moins une deuxième étape de copie, sur un support physique différent du cache et de la mémoire de l'ordinateur central, de la sauvegarde logique des données numériques créée lors de ladite première étape de copie, puis une troisième étape de suppression des données de la première sauvegarde présentes sur le cache.

L'invention concerne également un dispositif associé, permettant de mémoriser des données numériques d'un grand système informatique, du type comprenant au moins un ordinateur central, des moyens formant une mémoire à accès direct, appelée cache, des moyens formant une mémoire secondaire, ladite mémoire secondaire présentant un support physique différent du cache et de la mémoire de l'ordinateur central, et des moyens de lecture et d'écriture sur chacune desdites mémoires.

La mémorisation des données numériques dans un grand système informatique et l'exportation, sur des supports physiques différents, dans des lieux différents, génèrent des problèmes bien connus de l'homme de l'art. En effet, la conservation des données est nécessaire dans ce genre de structures, notamment pour éviter de perdre une trop grande quantité de données lors notamment d'un crash du système ou d'un sinistre dans les locaux. Ainsi, dans la grande majorité des entreprises mettant en oeuvre un dispositif utilisant un grand système informatique, les données sont copiées sur des supports physiques exportables, c'est-à-dire déplaçables physiquement pour être conservées dans des lieux différents. Généralement, et principalement pour des raisons de coût, lesdits supports utilisés sont des bandes magnétiques.

On appelle grand système informatique une organisation d'un ou plusieurs ordinateurs centraux à grande puissance de traitement. Ces ordinateurs centraux ont la capacité d'exécuter simultanément des applications informatiques variées (par opposition aux serveurs qui sont dédiés à des tâches données ou spécialisées) et d'adresser simultanément des périphériques variés. Les grands systèmes sont particulièrement utilisés dans les industries manipulant de grosses quantités de données informatiques ou d'importantes bases de données, notamment les banques ou les assurances. La plupart des procédés de mémorisation de données numériques, destinées à être exportées, mis en oeuvre dans les grands systèmes informatiques sont des robots virtuels (Virtual Tape Libraries for Mainframes). Les dispositifs correspondants comprennent, en plus des ordinateurs depuis lesquels les données sont émises, une mémoire tampon appelée cache et un ensemble de bandes magnétiques et de dérouleurs permettant la lecture et l'écriture de ces bandes. L'utilisation d'une mémoire tampon permet un accès à certaines données sans avoir à positionner physiquement la bande magnétique correspondante dans un dérouleur puis de la caler à l'endroit où sont inscrites les données auxquelles on souhaite accéder. Elle permet donc un gain de temps considérable.

Cependant, le cache étant de taille limitée, il est nécessaire de le vider périodiquement. Les dispositifs existants, appelés robots virtuels, ont généralement recours à des procédés possédant un système de gestion intégré du processus de vidage du cache. Généralement, ce vidage s'opère lorsque le niveau de remplissage du cache atteint un seuil prédéfini. Un critère, tel que la fréquence d'utilisation par exemple, permet de déterminer quelles données peuvent être effacées du cache prioritairement. Les données choisies sont alors copiées sur bande magnétique puis effacées du cache, directement après leur copie. L'opération de copie demande un certain temps, dû d'une part à l'écriture sur une bande magnétique mais également au temps de mise en place mécanique de la bande dans le dérouleur. Le débit maximal de remplissage du cache par l'ensemble des ordinateurs qui y copient des données doit donc être inférieur au débit de données entre cache et bande magnétique pour éviter toute saturation du cache. Le débit d'un tel procédé est donc limité. De plus, en cas de panne entre le cache et les dérouleurs de bandes magnétiques, le cache continuant par ailleurs à recevoir de nouvelles données et donc à se remplir, il se pose un problème de gel des fonctions ou des applications utilisant le cache.

Un autre inconvénient d'un tel procédé vient du fait qu'il est peu rentable, en terme de performances et de gestion de l'espace libre, d'écrire sûrement des données à la suite d'une bande déjà écrite si celle-ci a été retirée du dérouleur. Or l'écriture de données sur les bandes a lieu à chaque fois que de l'espace est nécessaire sur le cache. Ainsi, de faibles quantités de données sont écrites sur bandes à des instants différents ce qui pose un problème de remplissage des bandes magnétiques. Les utilisateurs de tels systèmes acceptent généralement que des données provenant de sources ou d'environnements différents soient écrites sur une même bande, afin d'éviter de perdre trop de place mémoire, ce qui pose des problèmes de sécurité, notamment dans le cas d'un mélange de données dont les niveaux de sécurité sont différents. A défaut, il en résulte la nécessité de stocker physiquement un nombre plus important de bandes, augmentant sensiblement le coût de stockage et posant des problèmes de performances dans le vidage du cache. Un autre inconvénient des procédés existants provient du fait que ces systèmes, dits intégrés, utilisent leurs propres processeurs et logiciels pour déclencher les copies de données. Ces logiciels possédant leurs propres algorithmes de cryptage, une bande magnétique issue d'un grand système informatique est aujourd'hui très difficilement réutilisable dans un autre. De plus, les dérouleurs de bandes magnétiques n'étant pas gérés par l'ordinateur de l'utilisateur, leur allocation sans reconfiguration pour d'autres tâches est impossible, ce qui alourdit encore le dispositif.

Un but de l'invention est de proposer un procédé de mémorisation de données numériques qui permet de libérer rapidement de l'espace sur le cache afin d'autoriser un débit de remplissage du cache supérieur à celui des installations traditionnelles et de palier les problèmes de sécurité, fiabilité et performance inhérents à une saturation du cache.

Un autre but de l'invention est de proposer un dispositif de mémorisation de données numériques qui permette une exportation facilitée des copies créées ainsi qu'une allocation modulable des moyens d'écriture sur les bandes.

A cet effet, l'invention a pour objet un procédé de mémorisation, dans un grand système informatique, de données numériques issues d'au moins un ordinateur central comprenant une mémoire, ledit procédé comprenant au moins une première étape de copie desdites données numériques sur des moyens formant une mémoire à accès direct, appelée cache, notamment des mémoires à disques, créant ainsi une sauvegarde logique desdites données, puis au moins une deuxième étape de copie, sur un support physique différent du cache et de la mémoire de l'ordinateur central, de la sauvegarde logique des données numériques créée lors de ladite première étape de copie, puis une troisième étape de suppression des données de la première sauvegarde présentes sur le cache, caractérisé en ce que, les données de la sauvegarde logique créée lors de la première étape de copie sont stockées sur le cache de manière à être reconnues par l'ordinateur central comme des données à accès direct et en ce que, lorsque la seconde étape de copie est terminée, les données issues de la première étape de copie restent présentes dans le cache, la suppression desdites données étant paramétrable au moyen d'au moins un desdits ordinateurs centraux.

Ce procédé s'applique tout particulièrement aux données reconnues par l'ordinateur central comme des données à accès direct. En effet, les procédés décrits précédemment stockent les données destinées à être écrites sur bande sous la forme de bandes magnétiques virtuelles. Il est alors nécessaire de disposer d'une interface permettant de lire les données ainsi stockées et de les rapatrier vers un ordinateur central. Le procédé objet de l'invention s'affranchit donc de ladite interface en stockant les données sur le cache sous forme de données disques.

Ainsi, une copie des données du cache est généralement créée sur bande bien avant que la suppression de ces données ne soit nécessaire. En cas de besoin, lesdites données peuvent être effacées du cache sans avoir à attendre que leur copie sur bande ne soit effectuée. La libération d'espace mémoire sur le cache en est donc considérablement accélérée.

L'invention a également pour objet un dispositif de mémorisation de données numériques d'un grand système informatique, du type comprenant au moins un ordinateur central, des moyens formant une mémoire à accès direct, appelée cache, des moyens formant une mémoire secondaire, ladite mémoire secondaire présentant un support physique différent du cache et de la mémoire de l'ordinateur central, et des moyens de lecture et d'écriture sur chacune desdites mémoires, caractérisé en ce que lesdits moyens permettant la lecture et l'écriture des données sur le cache ou sur la mémoire secondaire sont directement accessibles par l'ordinateur central, de manière notamment à ce que la communication entre cache et mémoire secondaire soit paramétrable au moyen d'au moins un ordinateur central afin de pouvoir mettre en oeuvre un procédé du type précité et ainsi émuler un robot virtuel.

Dans le dispositif selon la présente invention, l'originalité vient du fait que tout le procédé de sauvegarde qu'il permet de mettre en oeuvre est contrôlable par l'ordinateur central. Par ailleurs, l'utilisation d'un ordinateur central, c'est-à-dire contrôlé directement par un utilisateur et non intégré au dispositif de mémorisation (c'est-à-dire non construit spécifiquement pour le dispositif de mémorisation), permet notamment d'allouer à différentes tâches les moyens d'écriture sur la mémoire secondaire.

Ce procédé et ce dispositif permettent l'émulation d'un robot virtuel dans un grand système informatique, utilisant un ordinateur central (et non un serveur dédié), des disques et des dérouleurs de bandes standards, c'est-à-dire non spécifiquement construits ou programmés pour cet usage.

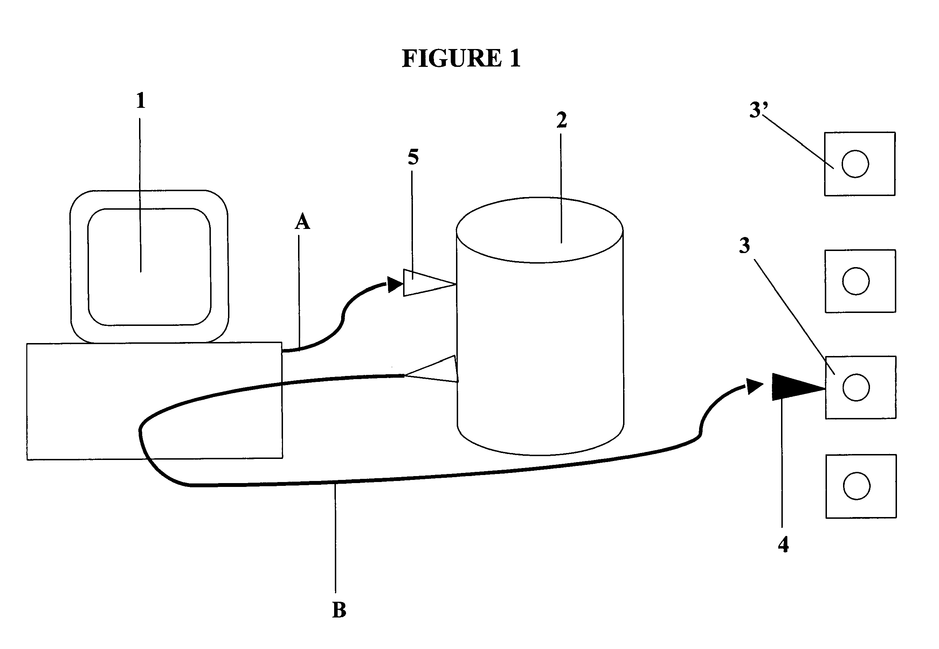

L'invention sera bien comprise à la lecture de la description suivante d'un exemple de réalisation, en référence au dessin annexé représentant une vue schématique du dispositif objet de l'invention.

### MODE DE REALISATION PREFERE

Comme représenté sur la figure, le dispositif conforme à l'invention comporte au moins un ordinateur 1 central, des moyens 2 formant une mémoire à accès direct, appelée cache, des moyens 3, 3' formant une mémoire secondaire, ladite mémoire secondaire présentant un support physique différent du cache 2 et de la mémoire de l'ordinateur 1 central tel que des bandes 3 magnétiques, et des moyens 4, 5 de lecture et d'écriture sur chacune desdites mémoires 2, 3, notamment des dérouleurs 4. L'originalité de ce dispositif vient du fait que tout le procédé de sauvegarde qu'il permet de mettre en oeuvre est contrôlable par l'ordinateur 1 central. Ainsi, lesdits moyens 4, 5 permettant la lecture et l'écriture des données sur le cache 2 ou sur la mémoire 3 secondaire sont directement accessibles par l'ordinateur 1 central, de manière notamment à ce que la communication entre cache 2 et mémoire 3 secondaire soit paramétrable au moyen d'au moins un ordinateur 1 central afin de pouvoir mettre en oeuvre un procédé du type précité et ainsi émuler un robot virtuel. Si la mémoire secondaire utilisée est constituée de bandes magnétiques, les moyens 4 de lecture et d'écriture utilisés sont des dérouleurs. Les moyens 5 d'écriture et de lecture sur un cache 2 de type disques durs sont en fait les têtes de lecture et d'écriture intégrées auxdits disques.

Dans le cas le plus fréquent où plusieurs ordinateurs 1 centraux utilisent le même dispositif pour réaliser la mémorisation de leurs données, les dérouleurs 4 et les moyens 5 de lecture et d'écriture sur cache 2 sont également partageables entre lesdits ordinateurs 1 centraux. Néanmoins, de préférence, on ne partage pas les mémoires 2, 3 et 3' entre les ordinateurs centraux, cette configuration évitant les interactions entre les ordinateurs centraux, améliorant ainsi la fiabilité, la performance et la sécurité du dispositif. L'ensemble des opérations aboutissant à la mémorisation de données numériques étant contrôlé par le ou les ordinateurs 1 centraux, il n'est pas nécessaire de prévoir de moyen de liaison directe entre cache 2 et bandes 3 magnétiques. Par liaison directe on entend une possibilité de communication entre deux éléments, au travers éventuellement de connecteurs, sans que les données communiquées ne soient modifiées ou stockées sur une autre machine. Ainsi, le robot virtuel émulé au moyen du dispositif objet de l'invention ne comporte pas de liaison directe entre cache 2 et mémoire 3 secondaire, l'intégralité des fonctions dudit robot étant actionnable au moyen d'un ordinateur 1 central.

Physiquement, le cache 2 peut être formé par une architecture de disques durs classiques. Il est alors possible pour une entreprise d'utiliser d'anciens disques pour réaliser le cache, ce qui était impossible avec les dispositifs traditionnels puisque le cache faisait partie intégrante du robot virtuel. Il en résulte une diminution sensible du coût du dispositif. De plus, l'architecture étant modulable, il est aisé de rajouter des disques pour ajouter de l'espace au cache. Cette opération nécessitait auparavant l'intervention des constructeurs du robot virtuel et l'utilisation d'un type spécifique de disque pour ajouter de l'espace. Dans un mode de réalisation préféré, la mémoire 3 secondaire sur laquelle est effectuée la deuxième étape B de copie est constituée de bandes 3 magnétiques, lisibles et inscriptibles au moyen de dérouleurs 4. Les bandes 3 sont utilisées pour des raisons de coût. En effet, le coût de la mémoire sur bande est actuellement environ dix fois plus bas que celui sur disque dur. Cependant, il n'est pas exclu qu'un autre type de mémoire, telle que d'autres disques par exemple, soit utilisé en tant que mémoire 3 secondaire.

Le procédé objet de l'invention concerne particulièrement les données numériques qui sont stockées sur le cache 2 de manière à être reconnues par l'ordinateur 1 central comme des données à accès direct. Ce terme est notamment employé en opposition aux données à accès séquentielles, utilisées dans les dispositifs de mémorisation actuels, telles que des bandes virtuelles, qui sont stockées sur le cache mais reconnues par les applications de l'ordinateur central comme des bandes magnétiques. Ces données numériques, généralement constituées d'un grand nombre de fichiers, sont les données qui posent le plus de problème de mémorisation sur des bandes magnétiques. En effet, le grand nombre de fichiers nécessite une synchronisation de la copie desdits fichiers sur bande magnétique pour obtenir un remplissage efficace desdites bandes.

Le procédé objet de l'invention comporte plusieurs étapes dont au moins une première étape A de copie de données numériques afin de créer une sauvegarde desdites données. Dans le reste de ce texte, le mot copie sera employé pour désigner l'action de reproduire les données numériques vers un espace mémoire différent de celui où elles se trouvent alors que le mot sauvegarde sera employé pour désigner les données créées lors d'une copie. La première étape A de copie de ce procédé consiste donc à copier les données numériques à conserver vers une mémoire tampon, appelée cache 2, afin de créer une première sauvegarde desdites données sur un support différent de la mémoire dudit ordinateur central. La sauvegarde ainsi créée dans la mémoire tampon 2 doit alors être copiée, sur un support 3 physique différent du cache 2 et de la mémoire de l'ordinateur 1 central afin de disposer d'une sauvegarde exportable de cette première sauvegarde.

La sauvegarde issue de la première étape A de copie est ensuite copiée sur une bande 3 lors de la deuxième B étape de copie. La différence avec les procédés habituels vient du fait que ladite sauvegarde ainsi copiée sur bande 3 n'est pas supprimée directement du cache 2 une fois la deuxième étape B de copie achevée. De plus, les paramètres initiant cette deuxième étape B de copie sont également très différents des procédés existants. En effet, le procédé objet de l'invention n'utilise pas d'ordinateur supplémentaire pour gérer la copie sur bande 3 des données présentes sur le cache 2. Toutes ces opérations sont contrôlées par l'ordinateur 1 central, ce qui permet à l'utilisateur de déterminer à quel moment la deuxième étape B de copie doit être initiée. Cette copie s'affranchissant du processeur supplémentaire présent dans les robots virtuels traditionnels, la seconde étape B de copie utilise la mémoire de l'ordinateur 1 central. Ainsi, les données de la sauvegarde logique créée lors de la première étape A de copie, lesdites données étant issues du cache 2 et destinées à être écrites sur un support 3 physique différent du cache 2 et de la mémoire de l'ordinateur 1 central, transitent par au moins un ordinateur 1 central avant d'être envoyées vers le support 3, de manière à ce que la deuxième étape B de copie puisse être paramétrée par l'utilisateur d'un ordinateur 1 central et que le moment de déclenchement de ladite deuxième étape B puisse être indépendant du niveau de remplissage du cache 2. Cette conception donne un contrôle total à l'utilisateur de cette deuxième étape B de copie. De manière générale, ladite deuxième étape B est initiée le plus tôt possible après la première étape A de copie afin de posséder une sauvegarde sur bande 3 magnétique des données présentes sur le cache 2 dès qu'il est nécessaire de libérer de l'espace sur le cache 2.

De plus, la deuxième étape B de copie des données, du cache vers des bandes 3 magnétiques, étant intégralement contrôlée par l'ordinateur 1 central et son utilisateur, le type des données copiées sur les bandes 3 n'est plus dépendant du robot virtuel utilisé, contrairement aux procédés traditionnels, dans lesquels le processeur intégré possédait son propre algorithme de cryptage. Ainsi, on peut disposer de bandes 3 magnétiques, contenant les sauvegardes de données numériques, qui soient facilement exportables et lisibles par d'autres dispositifs de mémorisation.

Pratiquement, la deuxième étape B de copie des données présentes sur le cache 2 est déclenchée périodiquement, selon une fréquence prédéfinie, ladite deuxième étape B de copie consistant en la copie, vers un support 3 différent du cache 2 et de la mémoire de l'ordinateur 1 central, des données numériques présentes sur le cache n'ayant pas subi préalablement de deuxième étape B de copie. D'autres critères peuvent être envisagés pour déterminer quelles données du cache doivent être copiées sur bandes 3. Il est cependant important d'initier ladite deuxième étape B de copie d'une donnée avant d'avoir besoin de supprimer ladite donnée du cache 2. Ainsi, lorsqu'il est nécessaire de libérer de l'espace sur le cache 2, ladite donnée peut être instantanément supprimée du cache sans avoir préalablement réalisé sa copie sur bande 3. La deuxième étape B de copie utilisant la mémoire de l'ordinateur 1 central pour y faire transiter les données depuis le cache 2 vers les bandes 3, une baisse de performance dudit ordinateur 1 central est à prévoir pendant ladite deuxième étape B. Ainsi, dans un mode de réalisation préféré, la deuxième étape B de copie de données numériques est effectuée pendant les périodes de faible activité de l'ordinateur 1 central par lesquelles ces données transitent, notamment la nuit. On peut ainsi utiliser les ressources de l'ordinateur 1 central sans occasionner de désagrément à l'utilisateur de celui-ci.

De plus, la deuxième étape B de copie s'effectuant périodiquement, et non ponctuellement en cas de besoin d'espace sur le cache 2, une plus grande quantité de données que dans les installations traditionnelles peuvent être copiées à chaque fois qu'une telle deuxième étape B de copie est initiée. Ainsi, on peut obtenir un meilleur remplissage des bandes 3 magnétiques utilisées, tout en utilisant un nombre de dérouleurs inférieurs aux systèmes traditionnels. Le fait de réaliser la copie des fichiers depuis le cache 2 vers des bandes 3 magnétiques avant d'en avoir réellement besoin permet de copier plus de données d'un coup et de disposer de données sur le cache 2 pouvant être supprimées au besoin instantanément. Il est alors possible d'utiliser des bandes 3 magnétiques de grande capacité ce qui réduit sensiblement le nombre de bandes nécessaires et leur coût de stockage. De plus, la quantité importante de données à copier à chaque deuxième étape B permet d'éviter de copier des données provenant de plusieurs sources sur une même bande, améliorant ainsi la sécurité du dispositif.

Pour des raisons de sécurité, il est également possible que plusieurs sauvegardes d'un même ensemble de données sur bandes 3 magnétiques soient nécessaires. Les utilisateurs du système informatique peuvent par exemple vouloir posséder des sauvegardes desdites données en plusieurs lieux physiquement distincts, afin de conserver les données en cas de sinistre, tel qu'un incendie, sur l'un des sites. Ainsi, il peut être prévu plusieurs occurrences de la deuxième étape B de copie, réalisées de manière synchronisées ou non, sur des supports (3, 3') physiques différents d'une occurrence à une autre, afin de disposer de plusieurs exemplaires de sauvegarde d'un même ensemble de données numériques.

Une fois les données du cache 2 copiées sur bande 3 magnétique, lesdites données restent généralement présentes sur le cache 2 pendant une certaine durée afin de rester accessibles rapidement aux utilisateurs des ordinateurs 1 centraux. La suppression desdites données, déjà copiées sur bandes 3, peut s'effectuer selon plusieurs critères. L'utilisateur de l'ordinateur 1 central d'où sont issues les données peut par exemple paramétrer le temps pendant lequel lesdites données resteront sur le cache 2. En cas de remplissage trop important du cache 2, certaines données doivent également être supprimées. Divers critères, tels que la fréquence d'utilisation par exemple, permettent à l'ordinateur 1 central de déterminer les données à effacer du cache 2 prioritairement. De plus, la plupart des fichiers ayant été copiés sur le cache 2 sont régulièrement l'objet de modifications et de mises à jour. Il en résulte la création d'une autre version de sauvegarde des données dudit fichier. On parle dans ce cas de version ultérieure du fichier ou des données. Il n'est alors pas nécessaire de conserver sur le cache 2 la version antérieure dudit fichier puisque généralement seule la version la plus récente est utilisée. Ainsi, l'étape de suppression d'un ensemble de données numérique présentes sur le cache 2 est initiée lorsqu'une version ultérieure dudit ensemble de données est présente sur le cache et/ou lorsque la présence dudit ensemble de données sur le cache excède un temps prédéterminé et/ou lorsque le niveau de remplissage du cache 2 atteint un seuil prédéfini.

## Revendications

1. Procédé de mémorisation, dans un grand système informatique, de données numériques issues d'au moins un ordinateur (1) central comprenant une mémoire, ledit procédé comprenant au moins une première étape (A) de copie desdites données numériques sur des moyens (2) formant une mémoire à accès direct, appelée cache, notamment des mémoires à disques, créant ainsi une sauvegarde logique desdites données, puis au moins une deuxième étape (B) de copie, sur un support (3) physique différent du cache (2) et de la mémoire de l'ordinateur (1) central, de la sauvegarde logique des données numériques créée lors de ladite première étape (A) de copie, puis une troisième étape de suppression des données de la première sauvegarde présentes sur le cache (2),
**caractérisé en ce que**, les données de la sauvegarde logique créée lors de la première étape (A) de copie sont stockées sur le cache (2) de manière à être reconnues par l'ordinateur (1) central comme des données à accès direct et **en ce que**, lorsque la seconde étape (B) de copie est terminée, les données issues de la première étape (A) de copie restent présentes dans le cache (2), la suppression desdites données étant paramétrable au moyen d'au moins un desdits ordinateurs (1) centraux.

2. Procédé de mémorisation, dans un grand système informatique, de données numériques selon la revendication 1,
**caractérisé en ce que** les données de la sauvegarde logique créée lors de la première étape (A) de copie, lesdites données étant issues du cache (2) et destinées à être écrites sur un support (3) physique différent du cache et de la mémoire de l'ordinateur (1) central, transitent par au moins un ordinateur (1) central avant d'être envoyées vers ledit support (3), de manière à ce que la deuxième étape (B) de copie puisse être paramétrée par l'utilisateur d'un ordinateur (1) central et que le moment de déclenchement de ladite deuxième étape (B) puisse être indépendant du niveau de remplissage du cache (2).

3. Procédé de mémorisation, dans un grand système informatique, de données numériques selon l'une des revendications 1 ou 2,
**caractérisé en ce que** la deuxième étape (B) de copie des données présentes sur le cache (2) est déclenchée périodiquement, selon une fréquence prédéfinie, ladite deuxième étape (B) de copie consistant en la copie, vers un support (3) différent du cache (2) et de la mémoire de l'ordinateur (1) central, des données numériques présentes sur le cache (2) n'ayant pas subi préalablement de deuxième étape (B) de copie.

4. Procédé de mémorisation, dans un grand système informatique, de données numériques selon la revendication 2,
**caractérisé en ce que** la deuxième étape (B) de copie de données numériques est effectuée pendant les périodes de faible activité de l'ordinateur (1) central par lesquelles ces données transitent, notamment la nuit.

5. Procédé de mémorisation, dans un grand système informatique, de données numériques selon l'une quelconque des revendications précédentes,
**caractérisé en ce qu'**il est prévu plusieurs occurrences de la deuxième étape (B) de copie, réalisées de manière synchronisées ou non, sur des supports (3, 3') physiques différents d'une occurrence à une autre, afin de disposer de plusieurs exemplaires de sauvegarde d'un même ensemble de données numériques.

6. Procédé de mémorisation, dans un grand système informatique, de données numériques selon l'une quelconque des revendications précédentes,
**caractérisé en ce que** l'étape de suppression d'un ensemble de données numérique présentes sur le cache (2) est initiée lorsqu'une version ultérieure dudit ensemble de données est présente sur le cache (2) et/ou lorsque la présence dudit ensemble de données sur le cache (2) excède un temps prédéterminé et/ou lorsque le niveau de remplissage du cache (2) atteint un seuil prédéfini.

7. Dispositif de mémorisation de données numériques d'un grand système informatique, du type comprenant au moins un ordinateur (1) central, des moyens (2) formant une mémoire à accès direct, appelée cache, des moyens (3) formant une mémoire secondaire, ladite mémoire (3) secondaire présentant un support physique différent du cache (2) et de la mémoire de l'ordinateur (1) central, et des moyens (4, 5) de lecture et d'écriture sur chacune desdites mémoires (3, 3')
**caractérisé en ce que** lesdits moyens (4, 5) permettant la lecture et l'écriture des données sur le cache (2) et la mémoire (3) secondaire sont directement accessibles par l' ordinateur (1) central, de manière notamment à ce que la communication entre cache (2) et mémoire (3) secondaire soit paramétrable au moyen d'au moins un ordinateur (1) central afin de pouvoir mettre en oeuvre un procédé selon l'une des revendications 1 à 6 et ainsi émuler un robot virtuel.

8. Dispositif de mémorisation de données numériques d'un grand système informatique selon la revendication 7,
**caractérisé en ce que** le cache (2) est formé par une architecture de disques durs.

9. Dispositif de mémorisation de données numériques d'un grand système informatique selon l'une des revendications 7 ou 8,
**caractérisé en ce que** la mémoire (3) secondaire est constituée de bandes magnétiques, lisibles et inscriptibles au moyen de dérouleurs (4).

10. Dispositif de mémorisation de données numériques d'un grand système informatique selon l'une quelconque des revendications 7 à 9,
**caractérisé en ce que** le robot virtuel émulé au moyen dudit dispositif ne comporte pas de liaison directe entre cache (2) et mémoire (3) secondaire, l'intégralité des fonctions dudit robot étant actionnable au moyen d'un ordinateur (1) central.
